# EUROPEAN PATENT SPECIFICATION

(11) **EP 4 215 663 B1**
(45) Date of publication and mention of the grant of the patent: **30.10.2024**
(21) Application number: 22152535.5
(22) Date of filing: 20.01.2022
(51) Int. Cl.: D04H 1/4274, D04H 1/64, D04H 1/732, B29C 70/12, B29C 70/42, B27N 1/02, B27N 3/02, B27N 3/04, D21B 1/08

(54) **PROCESS FOR MANUFACTURING COMPONENTS FROM RECLAIMED TEXTILE FABRIC PRODUCTS**
VERFAHREN ZUR HERSTELLUNG VON KOMPONENTEN AUS WIEDERGEWONNENEN TEXTILPRODUKTEN
PROCÉDÉ DE FABRICATION DE COMPOSANTS À PARTIR DE PRODUITS DE TISSU TEXTILE RÉGÉNÉRÉ

(43) Date of publication of application: 26.07.2023
(73) Proprietor: Chopvalue Manufacturing Ltd, Vancouver, BC V5X 4N6 (CA)
(72) Inventor: HARSTE, Dirk, Hamburg (DE)
(74) Representative: Gille Hrabal Partnerschaftsgesellschaft mbB Patentanwälte

(56) References cited:
- EP-A1- 3 396 059
- WO-A1-01/32405
- WO-A1-2015/044894
- WO-A1-2017/140520
- WO-A1-2021/047802
- DE-A1- 19 536 074
- GB-A- 2 317 189

## Description

The invention relates to a process for producing particle/polymer composites using a substrate S comprising shredded textile fabric products and a polymer binder P, therewith providing a new method of recycling / upcycling textile waste. Furthermore, a process for the manufacturing of a molded article obtained from the textile-based particle/polymer composite and the use thereof are disclosed.

### Background

One of the major challenges facing humanity in recent years is the reduction of CO₂ emissions in the earth's atmosphere. On the one hand, this is achieved by reducing the use of fossil fuels, but on the other hand, processes for storing CO₂ in the earth are also being investigated. In principle, a first step is the increased use of renewable raw materials in technical areas such as automotive, consumer goods etc., which temporarily store CO₂ at least for a few years and are neutral in the CO₂ balance in the short term during this phase of use.

These include, for example, biodegradable starch films or veneer woods which, modified accordingly, are used as paneling in car interiors.

It would be particularly desirable if not only newly produced materials could be used for such applications, but also raw materials that would otherwise be discarded as waste.

Raw materials relevant to the invention are used textile fabrics, such as in particular reclaimed cotton, comprising for example cotton-based clothes and textiles, used jeans (denim), and other kinds of cotton waste. Such raw materials are hereinafter also referred to as "reclaimed textile fabric products" or more particularly "reclaimed cotton".

In the sense of the present invention the term "textile product(s)" or "textile fabric(s)" or "textile fabric product(s)" covers not only cotton or cotton-based clothes and (home) textiles, but also any other usual natural or synthetic fibers or textile materials, including (without being limited thereto) cotton waste or textile scraps from the manufacturing process of clothes, wool, silk, jute fibers, hemp fibers, kenaf (*Hibiscus cannabinus*) fibers, velvet, taffeta, fibers derived from leather, cellulose staple fibers, as well as synthetic fibers including polyamides, polyester, polyolefins, polyurethanes, nylon, acrylics, and aramids. Preferred are textile fabrics based on natural fibers such as cotton and cotton products (e.g. denim, cotton waste), wool, silk, jute, hemp and kenaf fibers, as well as fibers derived from leather, and cellulose staple fibers. Most preferred are cotton and cotton products (e.g. denim, cotton waste), jute, hemp and kenaf fibers.

The amounts of used and discarded textile fabrics have increased significantly in the last years, also due to the increasing availability of cheap and low quality clothes and the ever more rapidly changing fashions. The majority of such low quality and often damaged textile products cannot be re-used in second-hand shops or for charity donations but must be discarded. There are still only few industrially and cost reasonable methods for reprocessing or upcycling such textile waste available and therefore a hughe amount of such textile waste products are usually burned or recycled as low-quality reclaimed textiles, e.g. for use as insulating or fill materials or cover fleeces on construction sites.

Generally, recycling means a process of converting waste materials into new materials and objects or their raw materials are turned into secondary raw materials. The recovery of energy from waste materials is often included in this concept. The recyclability of a material depends on its ability to reacquire the properties it had in its virgin or original state. A specific aspect of recycling methods is the so-called upcycling, which describes a creative reuse of the waste materials, and which is a process of transforming by-products, waste materials, useless, or unwanted products into new materials or products perceived to be of greater quality or environmental value. The recovery of textile fabrics is of high economic importance to save resources and reduce the increasing amounts of textile waste.

As mentioned above, there are some processed available of re-using shredded textile waste to produce new (up-cycled) clothes or roughly composed fleece materials, which are mostly used as covering or insulating materials on construction sites.

Generally, such processes to recover (recycle) textile waste products are time and cost consuming and may be negatively influenced by a requirement of separating the different kinds of textile materials and/or removing non-textile decorative elements. EP3049563B1 and the corresponding international application WO2015/044894A1 relate to a method of manufacturing products from textile waste, in particular textile waste comprising a majority of vegetable or animal fibers, in particular cotton or wool. Described therein is a process of manufacturing a product from textile waste by collecting and granulating the textile waste into fibers, mixing the granulated textile waste with a thermoplastic binder and forming a nonwoven mat therefrom.

In EP3049563B1 reference is also made to WO01 /32405, which relates to a method for forming fibre reinforced thermoplastic composite sheets and other articles, particularly to such methods and articles that may include waste or recycled fibrous materials, such as a textile. The method comprises a step of sourcing or producing a waste thermoplastic material, such as chipped polyethylene. In the method described therein, a flock is produced from the fibrous material and commingled with a thermoplastic material, which is then heated under pressure so as to at least partly melt the thermoplastic material and to cause it to partly fuse in the composite article. The composite is held under pressure until the temperature of the article falls below the melting temperature of the thermoplastic material.

The processes known from the prior art comprise dry processing of the textile fibres and the polymer binder, i.e. by mixing dry fibres with polymer powders or polymer particles or phenolic resins. Dry mixing of the textile fibres with dry binder powder or particles results in a statistically irregular distribution due to the given macroscopic distribution of the textile fibres and the binder powder/particles. This leads to irregular covering of the textile fibres with the (molten) binder and to areas (fibres) not sufficiently or at all covered with binder, resulting in weak points in the final composite material.

The inventors of the present invention have developed a new method for recycling / upcycling textile waste products by manufacturing composite products and molded articles therefrom, which in particular avoid the aforementioned disadvantages of the known processes. In particular, the inventors of the present invention developed a new and improved process for recycling / upcycling textile (waste) fibers and for preparing composite materials therefrom, which for the first time uses a wet gluing process with wet (liquid) binders. The new method described herein is based on a so-called Blowline process, wherein liquid (dissolved or dispersed) binder materials are contacted with the textile fibres, thereby covering (gluing) the surface of each textile fibre with the binder, which leads to a perfect and essentially complete distribution of the binder in the composite and therewith improved and more stable composite materials. By gluing each fibre separately, the formation of insufficient or not covered fibres and resulting weak points can be reduced significantly or even avoided completely. This offers the further advantage that less binder can be used while high mechanical properties (e.g. stability) can still be achieved. The new process described herein has previously been developed by the inventors of the present invention for recycling / upcycling paper waste by forming a composite product from shredded polymer-glued or polymer-coated paper products and a thermoplastic polymer, disclosed in EP4148174. Therein, thermoplastic polymers are used as the binder material.

This process has now been modified and further developed as described herein to offer new recycling / upcycling processes for textile waste products, which avoid the disadvantages of the known processes.

A process for upcycling coffee grounds by producing thermoformable and/or embossable composite materials from a mixture of particulate coffee grounds and a thermoplastic polymer having a Tg ≥ 20 °C is described in WO2021/047802.

The present invention now provides a new method for recycling / upcycling also textile waste products, which allows to provide composite materials with easily adjustable properties of the composite material, such as in general all mechanical properties, including rigidity, elasticity, water resistance, adsorption and swelling properties as well as insulating properties. Further, it has been found that the new process of the present invention offers broader options with respect to the selection of the binder material, as surprisingly, in addition to thermoplastic polymers as used in the prior art, also duroplastic (thermosetting) binders can successfully be processed to such composites. The inventors further found additional options for controlling, adjusting or improving the properties of the resulting composite materials, which offers a broad variety of composite products with varying properties for many different needs. Such additional adjustment options comprise for example the addition of other waste products, such as the paper waste products described in EP4148174 and/or the addition of other biofibers, e.g. in the form of shredded or particulate bamboo, miscanthus or wood (or mixtures thereof).

WO2008/112656 A1 discloses a regenerated cotton board material comprised of dry cotton lint fiber and wood fiber. Further, non-cellulosic fibers such as synthetic fibers or other natural fibers may be comprised in the material. The cotton may be obtained from reclaimed cotton such as blue denim, and the wood fibers can be obtained from recycled wood pulp derived from recycled paperboard or corrugated cardboard. Other natural fibers which may be comprised include hemp and jute. Finally, synthetic fibers may be used in addition, such as polyester, nylon, acrylics, polyamides, polyolefins and aramids. The process disclosed comprises forming an aqueous slurry fiber furnish comprising dry cotton lint fiber and wood fiber, wet processing the fiber furnish, calendaring the fiber furnish to remove the bulk of the water, and drying the resulting calendared materials. In place of the wood material, a binder may be used, and the processing can be accomplished by using a conventional papermaking machine to produce the board material.

WO2008/057390 A2 discloses engineered wood products (composites) including wood and/or other cellulosic fibers and non-cellulosic fibers, all or part of which can be derived from post-industrial and/or post-consumer materials. The wood products also include a binding agent such as a latex and can be in the form of a sheet, a three-dimensional article or a plurality of laminated sheets, and can include one or more additional layers such as top coat layers, reinforcing layers, cushioning layers, wood veneer layers etc. Fibers which can be used include cotton, wool, jute, fibers derived from leather and/or cellulose staple fibers, kenaf, hemp and synthetic fibers such as polyamides, polyester, polyolefins, polyurethanes etc. The engineered wood products may be used as flooring, an in construction or cabinetry. The process for obtaining the engineered wood products includes a) forming a slurry from the combination of wood fibers, non-wood fibers selected from natural cellulosic fibers, synthetic polymers and inorganic fibers, fillers and/or hydrophobic agents, if desired, a cationic wet strength resin or polyamine, b) adding a binder to the slurry, c) adding a flocculating agent to the slurry, d) flocculating the fibers, e) calendaring the fiber furnish to remove the bulk of water, f) drying the resulting calendared material and forming it into a desired shape, and g) heating the resulting shaped material under pressure to form an engineered wood product.

DE 100 41 765 A1 discloses a process for obtaining wood materials from waste paper such as newspaper or magazine paper, which comprises preparing a slurry from waste paper, adding a formaldehyde-free resin emulsion and a flocculating agent, removing water by filtration, squeezing water out of the obtained filter cake as far as possible, and drying.

Further disadvantages of the afore described processes are the need of high amounts of processing water and that the drying of the products requires much energy.

EP3396059A1 discloses a processing device suitable for fibrillating fibrous materials. The processing device is suitable to form sheets, such as paper sheets, from the fibrous material.

GB2317189A describes a vehicle panel material comprising a mixture of recycled shredded thermos-formable material and reprocessed headliner material including fibrous bats with polyester fibers, glass fibers and a thermos-setting resin.

DE19536074A1 describes a composite component comprising a binder and natural fibre reinforcement, wherein in the structure, the reinforcement comprises wholly or partially recycled natural fibres, especially of jute or sisal. A process for producing the composite component is also described.

The object of the present invention was therefore to provide a new method for handling the arising amounts of textile waste products, and to provide a cost-effective process for recycling / upcycling textile waste products. The object of the invention deals with providing an upcycling process for providing not only recycled (recovered)textile or cotton cloth, reclaimed denim and/or clothes, but new products of higher value based on the textile waste materials. A further object of the present invention is to provide a process for recycling / upcycling textile waste products and preparing composite materials therefrom, which avoids the above-described disadvantages of know processes. A further object of the present invention is to provide a process for producing a particle/polymer composite and a particle/polymer molded part obtainable therefrom, which is based on shredded (particulated) textile products, in particular shredded reclaimed cotton, and can be produced at low cost. A further object relates to providing new composite materials with improved mechanical properties, including rigidity, elasticity, water resistance, adsorption and swelling properties as well as insulating properties. A further object relates to providing new composite materials for providing molded parts for various applications, including for example parts for indoor applications. A further object of the invention was to provide a cost and energy saving process for recycling / upcycling textile waste products.

The object has been solved by developing a new process of manufacturing textile-based particle/polymer composites based on shredded polymer-coated textile products, in particular reclaimed cotton. In particular, this object is achieved by the process as described in more detail below and according to the claims.

The object of the present invention is in particular solved by a process of manufacturing a textile-based particle/polymer composite using a particulate substrate S comprising shredded textile products and at least one polymeric binder P, comprising the following steps:
(i) the particulate substrate S is introduced into a gas stream, then
(ii) the particulate substrate S is contacted with a dispersion, solution or liquid of the polymeric binder P in the gas stream, then
(iii) the particulate substrate S contacted with the polymeric binder P is dried in the gas stream and deposited, then
(iv) the obtained deposited binder-contacted substrate is converted into a layer or transferred into a mold of a desired shape, and then
(v) the binder-contacted substrate is densified (compacted) at a suitable temperature to form the textile-based particle/polymer composite,
wherein
(a) the substrate S comprises shredded textile products; and
(b) the polymeric binder P is thermoplastic and has a glass transition temperature [Tg^{P}] ≥ - 20 °C measured according to DIN EN ISO 11357-2 (2013-09), or
(c) the polymeric binder P is duroplastic.

Also disclosed herein are the particle/polymer composites themselves, which are obtainable according to the method according to the invention, as well as their use for the manufacturing of particle/polymer moldings (molded articles), such as elements in buildings such as wall panels, room dividers, floors, tiles, counters and in furniture, as well as parts for car interiors, music instruments or any other suitable application.

### Detailed description of the invention

A characteristic feature of the process according to the invention is that it is based on shredded (particulated) textile products (as defined above), which allows not only the recycling thereof, but rather an upcycling to new products of high quality different from typical textile fabric products. By using the process described herein with a substrate based on shredded (particulated) textile products it is further possible to prepare products like molded articles for a variety of possible applications (e.g. car fittings, molded car interior parts, parts of music instruments etc.) or elements for use in buildings, such as wall panels, room dividers, floors, tiles, counters and in furniture, and generally any parts or elements which are suitable to replace conventional parts or elements made of plastic or wood (e.g. veneers, wood-based boards like particle boards, MDF, OSB and others which are usually prepared using formaldehyde containing resins) in a much more time and energy saving way and therewith more cost effective and more environmentally friendly and sustainable.

To obtain the textile-based substrate S for the process of the invention the textile fabric products are particulated, e.g. by shredding, cutting, chopping, milling, or any other suitable method for shredding textile fabric products.

If old clothes or other reclaimed cloth is used, it may become necessary to remove buttons, zippers and other attachments (decorative elements) before or after the shredding but in any case, before converting the particulated textile fabrics into a pulp by a conventional process, e.g. by wet processing through beating or by dry cutting and then dispersing in water, or by using a disk refiner and subsequently mixing with water to obtain a pulp.

Shredded (particulate) textile products S used according to the invention may have a particle size of ≤ 5 mm length and ≤ 2 mm width. The ratio length/width is preferably ≥ 3, more preferably ≥ 5 and most preferably ≥ 20.

In the process of the invention the waste textile products are shredded (particulated), e.g. by shredding, cutting, chopping, milling, or otherwise crushing. The particulated textile products S are then treated with water and pressure at temperatures between 100 to 200 °C, preferably < 200 °C, more preferably < 180 °C, even more preferably < 160 °C, most preferred ≤ 140 °C. A preferred temperature range is between > 110°C and < 160 °C, more preferably between > 110°C and ≤ 140 °C. The resulting textile particle pulp is preferably milled in a subsequent step to obtain even smaller textile particles.

References to "textile particle(s)" or "particle(s)" of the "particle/composite" mean the shredded or particulated textile fabric materials and correspond to textile "fibers".

The textile particle pulp forms the substrate S of the invention, which is then introduced into the gas stream.

According to the invention, another essential component is a polymeric binder P. As a polymeric binder P, a thermoplastic polymer P, whose glass transition temperature Tg^{P}, measured according to DIN EN ISO 11357-2 (2013-09), is ≥ - 20 °C, preferably ≥ - 10 °C, more preferably ≥ 20 °C, even more preferably ≥ 40 °C and particularly preferably is ≥ 60°C, can be used.

It is also possible to use a duroplastic (thermosetting) hardening system as binder. Strictly speaking, the duroplastic (thermosetting) binder materials are, as a raw material, not yet polymers but monomers or oligomers, which polymerize in the hardening process to become polymers (duroplasts). For sake of clarification, in the context of the present invention, the term "polymeric binder P" and "polymer P" may be used interchangeably and both cover both, polymeric binders like thermoplasts (thermoplastic polymers as described herein) as well as the duroplastic binders (duroplastic hardening systems as described herein). According to the invention, the thermoplastic or duroplastic polymeric binder P is also simply referred to as a "binder" or "binding agent". Accordingly, the term "particle/polymer composite" use herein means the "particle/binder composite".

When using thermoplastic polymers P with a glass transition temperature Tg^{P} < 20 °C, such as thermoplastic polymers having a Tg^{P} in a range of -10°C to + 10 °C, it is surprisingly possible to prepare particle/polymer composite materials (preforms) as well as the molded articles obtainable therefrom, which exhibit a higher elasticity, and which exhibit different insulating properties. Therefore, with the selection of thermoplastic polymers with different Tg's the properties of the resulting materials can be controlled and adjusted in accordance with the needs and desired application.

Thermoplastic polymers P are understood to be those polymers which can be formed in a certain temperature range (≥ Tg^{P}), whereby this process is reversible, which means that it can be repeated several times by cooling and reheating. However, care must be taken to ensure that the polymer is not heated to the point where thermal decomposition of the polymer begins.

Thermoplastic polymers are to be distinguished from thermosetting polymers (duroplasts), which are not reversibly deformable after their manufacture, for example by curing. If a thermoplastic polymer is used in the invention, an embossable and/or thermoformable composite is obtained.

All thermoplastic polymers which have a glass transition temperature ≥ - 20 °C determined according to the above-mentioned determination method can be used according to the process, preferably thermoplastic polymers having a glass transition temperature ≥ 20 °C, such as acrylonitrile/butadiene/styrene copolymers, polyamides, polyacetates, homo- or copolymers of (meth)acrylates, styrene acrylates, polycarbonates, polyesters, such as polyethylene terephthalates, polyolefins, such as polyethylenes or polypropylenes, acid-modified polyethylenes and -polypropylenes, polystyrenes, polyether ketones, polylactic acid, ethylene/acrylic acid copolymers, or polyvinyl chlorides.

In case a duroplastic binder (thermosetting polymer) is used, the obtained composite is not embossable and/or thermoformable. Duroplastic binders which can be used in the invention are e.g. UF (urea formaldehyde resin), PF (phenoplast, i.e. resin based on phenol), MUF (melamine urea formaldehyde resin), MUPF (melamine urea phenol formaldehyde resin) or pMDI (polymeric diphenylmethane diisocyanate).

Preferably, however, the polymeric binder P, either thermoplastic or duroplastic, does not comprise intentionally added formaldehyde or structural moieties derived from formaldehyde. Standard wood-based boards like particle boards, MDF, OSB and others are usually bonded with formaldehyde containing resins (e.g. UF, PF, MUF). Formaldehyde-containing binders are also used in most cases in biobased composites. However, formaldehyde-containing resins lead to the problem of undesired formaldehyde emission. In the process according to the invention, preferably board materials can be provided with no formaldehyde emission or only very low emissions, far below the required threshold. The formaldehyde emission of the particle/polymer composite and/or the molded articles and/or laminates obtained therefrom of the present invention can be determined according to VDA 275 "Formteile für den Fahrzeuginnenraum; Bestimmung der Formaldehydab-gabe".

In the process of the invention, the polymeric binder P is contacted with the substrate S (comprising the shredded textile products) in a gas stream. Therefore, the polymeric binder P is used in the form of a dispersion, solution or liquid. Preferred are aqueous dispersions or solutions.

In principle, a dispersion (or solution) of the polymeric binder P can be obtained by dissolving or dispersing the polymer or binder raw material *per se*, e.g. provided in powder, flake or fiber form. Examples of thermoplastic polymers are polyethylene or polypropylene powder, flakes or fibers.

Thermoplastic polymers P are advantageously used in the form of an aqueous dispersion (hereinafter also referred to as "aqueous polymer P dispersion"), produced by radically induced aqueous emulsion polymerization of ethylenically unsaturated monomers P [monomers M]. The at least one monomer M can be selected from the group comprising olefins, vinylaromatic monomers, vinyl halides, esters of vinyl alcohol and monocarboxylic acids having 1 to 18 carbon atoms, esters of α,β-monoethylenically unsaturated mono- and dicarboxylic acids having 3 to 6 carbon atoms with alkanols having 1 to 12 carbon atoms, nitriles of α,β-monoethylenically unsaturated carboxylic acids and C₄₋₈-conjugated dienes, and are selected to an extent of ≤ 25% by weight from the group comprising α,β -monoethylenically unsaturated mono- and dicarboxylic acids having 3 to 6 carbon atoms and amides thereof, and also monoethylenically unsaturated compounds having at least one amino, epoxy, hydroxyl, N-methylol or carbonyl group and compounds having at least two nonconjugated ethylenically unsaturated double bonds.

Generally, (aqueous) dispersions of (thermoplastic or duroplastic) polymeric binders P are preferably used. According to the invention, aqueous polymer solutions only play a minor role.

According to the invention, commercially available aqueous thermoplastic polymer dispersions can be used advantageously, which are usually offered as binders e.g. for paints, coatings or similar, e.g. acForm^{®}, Acronal^{®} S940, Acronal^{®} 12 DE, Acronal^{®} 969 (all BASF AG).

Duroplastic resins which can be used advantageously are e.g. UF resin Kaurit^{®} (BASF AG), recently renamed Planarit^{®} (Planatol GmbH) and pMDI. These are commonly known and commercially available. Duroplastic resins are frequently sold as a powder and are dispersed in water by the user. Powder duroplastic resin and aqueous dispersions of duroplastic resins are suitable according to the invention. The duroplastic pMDI binder (isocyanate) is a water-free liquid system.

In the process of the invention the particulate substrate S and the polymeric binder P are contacted with each other in a gas stream in a so-called Blowline process. A Blowline process used for preparing wood fiberboards from a thermodeformable polymer/fiber composite on the basis of lignin fibers (wood, cellulose, and plant fibers) is described in WO2017/140520. The process described therein is not used or described for upcycling textile products. The process of the invention for recycling / upcycling of textile waste products is mainly based on the Blowline process described in WO2017/140520 for fiber-/ wood-based products. In principle the process conditions of the Blowline process described therein can be applied also in the process of the present invention. However, in the process of the present invention, the preparation of the textile-based substrate S differs from the corresponding preparation step for preparing the fiber-/wood-based substrate used in WO2017/140520. Concretely, the conditions for preparing the shredded waste textile pulp are adapted as follows:
In a first shredding / milling step the textile waste products are particulated by shredding, cutting, chopping, milling, or otherwise crushing the textile products. If necessary, non-textile elements like zippers, decorative elements or buttons are removed. Compared to shredding lignin-fiber-/wood-products as used in WO2017/140520 this first shredding / milling can be carried out more cost and energy saving, since it is generally easier to particulate the textile products used herein than the lignin-fiber-/wood-products used in WO2017/140520. In the step of treating the particulated textile products with water and pressure (in a water tank) it is possible to use lower temperatures. When using lignin-fiber-/wood-products usually temperatures between 160 and 200 °C, preferably > 180 °C are applied. Further, it is possible to apply shorter dwell periods in the water tank. If lignin-fibers or particulated wood products are used longer dwell periods are required to achieve sufficient softening of the fresh wood fibers and to be able to reduce the energy in the subsequent milling step in the refiner. Since textile fibers, such as used in the present invention, soften very quickly, the dwell periods in the water tank can be reduced significantly. Finally, less energy is needed for milling the textile-particle pulp in the refiner because the refiner gap can be set much larger. Usually, the refiner gap is set in the range of 0.1-0.15 mm when using lignin-fiber-/wood-products as in WO2017/140520. In contrast, when using the textile waste products of the invention the refiner gap can be set to > 1 mm. Since the textile products are made from weakly connected fibers, it is much easier to disintegrate the textile fiber-structure again.

After contacting the substrate S with the polymeric binder P dispersion, solution or liquid the resulting substrate S / polymeric binder P "mixture / combination" (or the polymeric binder P coated / impregnated substrate S) is dried in the gas stream and deposited, followed by transferring the deposited dried substrate S / polymeric binder P "combination" into a layer, a floor or into a mold having the negative form of the desired shape to be obtained. Then, the binder-contacted substrate (the dried substrate S / polymeric binder P "combination") is densified (compacted) at a suitable temperature to form the textile-based particle/polymer composite of the invention.

In case of using a thermoplastic polymer P the densification is performed at a temperature greater than or equal to the glass transition temperature Tg of the polymer P [Tg^{P}] to form the thermoformable and/or embossable paper-based particle/polymer composite of the invention. Preferably, the densification temperature is greater than the Tg of the used polymer(s). In principle, the temperature and the thermoplastic polymer P must be selected to provide a mixture, wherein the thermoplastic polymer P has a tack at the Tg that effects that the substrate is sticking together.

If a duroplastic polymeric binder P is used, the densification is performed at a temperature of 100 °C to 230 °C.

In case of using a duroplastic polymeric binder P, the subsequent processing steps follow immediately after drying in the gas stream due to the low storage stability of such systems, i.e. within ≤ 30 min, preferably ≤ 15 min.

When using a thermoplastic polymer P, it is not required to perform the subsequent steps immediately since such systems are more storage stable and therefore not time-critical.

In a preferred aspect the aqueous dispersion of the polymer P, in case of using a thermoplastic polymer, has a film forming temperature < Tg^{P} preferably < 10°C below Tg^{P}.

In a further embodiment of the invention, it is possible to add shredded polymer-coated paper particles to the composition for forming the textile-based composite materials of the invention. In principle, all shredded polymer-coated paper particles as described in unpublished EP 21195673.5 can be used in a similar way as described therein.

In a further embodiment of the invention, it is possible to add biofibers or particles thereof, such as bamboo, miscanthus and/or wood fibers / particles or the like to the composition for forming the textile-based composite materials of the invention. Such biofibers can be derived from shredded biomaterials as mentioned herein. Examples include salvage timber, sawdust, wood scraps, wood fibers, wood shavings, wood flour, wood chips, post-industrial or post-consumer wood waste, bamboo, miscanthus chips etc.

In a further embodiment of the invention, it is possible to add shredded polymer-coated paper particles and biofibers or particles thereof, such as bamboo, miscanthus and/or wood fibers / particles or the like to the composition for forming the textile-based composite materials of the invention. Such biofibers can be derived from shredded biomaterials as mentioned herein.

Accordingly, the present disclosure covers the following embodiments:
a) textile-based composite materials,
b) textile-based composite materials with added shredded polymer-coated paper particles,
c) textile-based composite materials with added biofibers or particles thereof,
d) textile-based composite materials with added shredded polymer-coated paper particles and added biofibers or particles thereof.

The addition of further particulated waste products or fiber materials according to the above embodiments b), c) and d) allows an easy adjustment of the mechanical properties of the composite material, in particular with respect to rigidity and insulating properties, depending on the desired properties and application of the resulting composite materials.

Accordingly, such further embodiments of the present invention relate to a process of manufacturing a textile-based particle/polymer composite, using
a) a particulate substrate S_{T}, comprising shredded textile products,
   and
b) either a particulate substrate S_{P}, comprising polymer-glued or polymer-coated paper products, or
c) a particulate substrate S_{B}, comprising other biomaterials such as bamboo, miscanthus or wood particles, or
d) a particulate substrate S_{P}, comprising polymer-glued or polymer-coated paper products, and a particulate substrate S_{B}, comprising other biomaterials such as bamboo, miscanthus or wood particles,
and at least one polymeric binder P (as defined herein), with the process comprising the following steps:
(i) the particulate substrates S_{T} and S_{P} and/or S_{B} are together or separately introduced into a gas stream, then
(ii) the particulate substrates S_{T} and S_{P} and/or S_{B} are separately or in any mixture with each other contacted with dispersion, solution or liquid of the polymer P in the gas stream, then
(iii) the particulate substrates S_{T} and S_{P} and/or S_{B}, contacted (separately or as a mixture) with the polymeric binder P (as defined herein), are dried in the gas stream and deposited (either separately or in the form of the mixture) and, in the case of contacting, drying and depositing the substrates S_{T} and S_{P} and/or S_{B} separately, the separately dried and deposited binder-coated substrates can optionally be mixed in a desired ratio by using a blender (forming a blend),
(iv) the obtained deposited binder-contacted substrates, or mixtures or blends thereof, are transferred into one or more layers, floors or into molds of a desired shape, and then
(v) the binder-contacted substrates, or mixtures or blends thereof, are densified (compacted) at a suitable temperature (e.g. as defined above) to form the textile-based particle/polymer composite,
wherein
(a) the substrate S_{T} comprises shredded textile products, and the substrate S_{P} comprises shredded polymer-glued or polymer-coated paper products and/or the substrate S_{B} comprises other shredded biomaterials such as bamboo, miscanthus or wood particles; and
(b) the polymeric binder P is thermoplastic and has a glass transition temperature [Tg^{P}] ≥ - 20 °C measured according to DIN EN ISO 11357-2 (2013-09), or
(c) the polymeric binder P is duroplastic.

Therein, in step (iv) "preparing one or more layers" comprises depositing layers of a mixture or blend of substrates S_{T} and S_{P} and/or S_{B} ("mixed-substrate layer(s)") as well as depositing layers comprising either of the substrates S_{T} and S_{P} and/or S_{B} to prepare either layers based on textile fibres, layers based on shredded waste paper or layers based on shredded biomaterials ("mono-substrate layer(s)"). Such mono-substrate layers can then be individually processed in step (v) or different (varying) mono-substrate layers can be layered and combined with each other to form a layered composite in step (v). It is certainly also possible to prepare layers of the respective stubstrates in any mixture (i.e. mono-, bi- or triple-substrate layers") and combine them in any suitable combination with each other.

The additional particulated (e.g. shredded) paper-material S_{P} can in principle be obtained from all polymer-coated paper products (as defined in EP4148174) In particular, paper products, glued and/or coated with polymers, paper products which are coated on one or both sides and which are used for foodstuff (e.g. coffee to-go cups), paper bags for dry foodstuffs such as e.g. coffee, tea, soup powder, sauce powder; for liquids such as cosmetics, detergents, beverages, dairy products, tube laminates, paper carrier bags, paper laminates and coextrudates for ice cream, confectionery (e.g. chocolate and muesli bars), paper tape, cardboard cups (e.g. cardboard cups for cold and hot drinks), yoghurt cups, menu trays, wrapped cardboard containers (cans, barrels), wet-strength or moisture-resistant cardboard boxes for outer packaging (wine bottles, food), fruit crates made of coated cardboard, fast food plates, clamp shells, beverage cartons and cardboard boxes for liquids such as detergents and cleaning agents, frozen food cartons, ice-cream packaging (e.g. ice-cream cups, wrap-around cartons), paper labels and banderoles, flower and plant pots, special papers (e.g. sanding papers, filter papers) can be used. Preferably, the polymer-coated paper products are polymer-glued or polymer-coated paper products selected from polymer-coated disposable paper products, including polymer-coated paper take-away cups, dishes, bowls, bags, beverage cartons or packages. It is not necessary to remove the polymer-coatings or glues or colorings from the waste paper for further processing. For sake of clarification, it is noted that the expression "polymer-coated paper (products)" refers to the waste paper raw material, which is to be distinguished from the polymer-coated particulated waste paper prepared in the process of the invention with the polymeric binder P.

The additional particulated (e.g. shredded) biomaterial S_{B} can be derived from bamboo, miscanthus and/or wood. These biomaterials can be added singly or as a mixture of two or more different biomaterials. Examples of suitable biomaterials comprise wood chips, sawdust, salvage timber, wood scraps, wood fibers, wood shavings, wood flour, post-industrial or post-consumer wood waste, bamboo, miscanthus chips etc.

In such embodiments b), c) and d) described above, the shredded substrates S_{T} with S_{P} and/or S_{B} can be used in suitable ratios in accordance with the desired properties of the composite.

The ratio of total substrate(s) and total polymer P is preferably 80 to 95 % by weight of particles/fibers and 5-20 % by weight of polymer, preferably 85 to 90 % by weight of particles/fibers and 10-15 % by weight of polymer, based on the total composition. In case of using acForm^{®} or UF resin as polymer, the total amount of binder is for example 10 to 15 % by weight based on the total amount of substrate(s), in case of using pMDI resin, the total amount of binder based on the total amount of substrate(s) is for example 5 % by weight.

The mixing amount of textile-based substrate S_{T} is preferably from 10 to 95 % by weight, preferably 15 to 95 % by weight, based on the total amount of substrates.

The textile-based substrate S_{T} is preferably present in an amount of at least 50 % by weight, based on the total amount of substrates.

A further paper-based substrate S_{P} is preferably admixed with S_{T} in an amount of 0 to 50 % by weight.

A further biofiber-based substrate S_{B} is preferably admixed with S_{T} in an amount of 0 to 50 % by weight.

And in a mixture of textile-based substrate S_{T} with a paper-based substrate S_{P} and a biofiber-based substrate S_{B} the mixing amounts are preferably in a range of 10 to 100 % S_{T} and 0 to 50% S_{P} and 0 to 50% S_{B} by weight.

Mixing ratios of substrate S_{T}/S_{P} or of S_{T}/S_{B} of 1:9 to 9:1 can be used, such as of 1:9, of 1:3, of 1:1, of3: 1 or of 9: 1. A particularly preferred mixing ratio of the substrates is S_{T}/S_{P} or S_{T}/S_{B} of 1:1, each by weight.

In embodiments using a triple mixture, mixing ratios of substrate S_{T}/S_{P}/S_{B} of 50 : 25 : 25 % by weight are preferred.

The admixed paper-products and/or biomaterials are transformed to a similar particle size as the shredded textile particles by using conventional methods / the methods described above.

If the shredded materials S_{P} and/or S_{B} are introduced and processed in the gas stream separately, then separate pulps of the shredded materials are prepared and each separate pulp is introduced into the gas stream, contacted with the polymeric binder P, dried and deposited separately. The resulting dried deposited polymer-coated materials are then mixed in the desired ratio with a blender to form a blend. In the case of using a triple-mixture according to the above embodiment d) it is certainly also possible to process one of the substrates separately and two of the substrates in a mixture and then combine the deposited components in a blender as described above.

Accordingly, in the following, the term "substrate or particle blend" designates such a blend of separately obtained binder-coated particles, i.e. a blend of shredded binder-coated textile particles with shredded binder-coated paper particles and/or binder-coated shredded other biomaterials. The expression "substrate S" generically designates the respective substrate(s) S_{T} and S_{P} and/or S_{B} and mixtures or blends thereof. Introducing the shredded materials S_{T} and S_{P} and/or S_{B} into the gas stream as a mixture (either of two or all three substrates) and carrying out the binder-coating, drying and depositing in one step is preferred.

According to the invention, the deposited particle layer (floor or filled mold) according to step (iv) is understood to be a layer (floor or filled mold) of densely packed particles or particle blends. The particle layer (floor or filled mold) is obtained, for example, by spreading or casting the binder/substrate mixture or the respective blends evenly over a surface or in continuous operation on a conveyor belt (or into the desired molds). For example, the mixture or blend can be spread in a frame, e.g. with a spreading device adapted to the frame size, until the desired weight per unit area is achieved. The surface of the particle layer can then be smoothed, if desired, e.g. with a doctor blade, and can optionally be pre-compressed, e.g. with a calender roller or a press stamp adapted to the size of the frame thereby increasing the bulk density by e.g. a factor of approx. 1.1 to 3.0. The density of the densely packed layer (or molded article) and/or the pre-compressed layer (or molded article) can be calculated (g/cm³). A pre-compressed layer or molded article according to step (iv) preferably has a density of ≥ 0.05 and ≤ 0.50 g/cm³, often ≥ 0.05 and ≤ 0.30 g/cm³, and often ≥ 0.05 and ≤ 0.20 g/cm³, if necessary. This step of mechanical pre-compression is carried out at a temperature well below the glass transition temperature Tg^{P} in case of using a thermoplastic polymer, and well below 100 °C in case of using a duroplastic binder.

If present in the form of a layer or floor the particle layer can have a thickness of ≥ 0.3 and ≤ 50.0 cm, advantageously ≥ 0.3 and ≤ 30.0 cm and especially advantageously ≥ 0.3 and ≤ 10.0 cm.

If desired, usual additives can be added to the polymer/substrate mixture or blends, e.g. biocides, flame retardants, waxes, fragrances, dyes, pigments, UV-protection agents and/or other usual additives.

If a commercially available binder dispersion, solution or liquid system is used, the polymer (binder)/substrate mixture or blends naturally contain the auxiliary substances already contained in the binder dispersion (or liquid system or solution), such as dispersants and biocides.

In the context of the invention, drying is to be understood as meaning that the residual moisture content of the obtained substrate S/polymer P mixture is reduced to ≤ 15 weight % and advantageously to ≤ 10 weight %, preferably to ≥ 5 and ≤ 10 weight %.

According to the invention, residual moisture content is understood to be the percentage difference in weight, relative to the substrate S/polymeric binder P mixture (or blend) used, which results when 1 g of substrate S/polymeric binder P mixture (or blend) is dried in a drying oven at 120 °C for one hour.

The particle layer or the particles filled in a mold of the desired shape is then, in the case of using a thermoplastic polymer, compressed (densified) at a temperature ≥ Tg^{P}, preferably > Tg^{P}, to form a thermoformable and/or embossable particle/polymer composite, which contains the shredded textile products and optionally additional particles (paper and/or biofiber particles). In case of using a duroplastic binder, the compression is carried out at 100 °C to 230 °C, and the obtained composite is neither embossable nor thermoformable. Compression (densification) in case of a thermoplastic polymer is understood to mean when the particle layer (or filled mold) is compressed under pressure at a temperature ≥ Tg^{P}, preferably > Tg^{P}, to form a thermoformable and/or embossable polymer/particle composite according to step (v). In the process described herein the density of the casted layers, floors or mold-shapes is not very high so that the resulting (pre-) compressed composite material is still a porous material and the further densification (compaction) step requires no high pressure. Accordingly, there is no risk of cracks or damages in the compression step even when carrying out the compression at a temperature equal to the polymer's Tg.

The density of the particle/polymer composite according to step (v), in case of either a thermoplastic or a duroplastic binder, is increased by a factor of ≥ 1 and advantageously by a factor of ≥ 5 compared to the corresponding particle layer (filled mold) according to step (iv), depending on the particulate substrate S used. The compression/densification can be carried out in a way and to a degree that the density of the obtained textile-based particle/polymer composite is increased by a factor up to 20 compared to the corresponding binder-contacted (optionally pre-compressed) substrate layer (or filled mold) before densification in step (v).

The textile-based particle/polymer composite obtainable in step (v) of the process of the present invention preferably has a density of 0.30 to 0.98 g/cm. In a preferred embodiment the textile-based particle/polymer composite according to step (v) has a density of 0.60 to 0.98 g/cm³.

In this context, it is important to note that the particle/polymer composite according to the invention has an advantageous planar flat shape. Of course, the particle/polymer composite according to the invention can also have any non-planar three-dimensional shape, depending on the selected press mold.

In the manufacturing of the particle/polymer composite, advantageously the weight ratio between substrate S and polymer P is between ≥ 2 and ≤ 50. Preferably, the lower weight ratio range is ≥ 3, more preferably ≥ 4. Preferably the upper weight ratio range is ≤ 50, preferably ≤ 30, more preferably ≤ 20.

In the manufacturing of the particle/polymer composite, advantageously the amount of the polymeric binder P is between ≥ 2 and ≤ 30 wt.%, preferably between ≥ 3 and ≤ 25 wt.%, more preferably between ≥ 5 and ≤ 20 wt.% of polymeric binder P (calculated as binder, or, if a binder dispersion is used, as the total binder content of the dispersion) based on the quantity of the shredded substrate material (S) used. Accordingly, the amount of shredded substrate material (S) used is between ≤ 98 and ≥ 70, or between ≤ 97 and ≥ 75, or between ≤ 95 and ≥ 80 wt%, respectively. That means, the composite of the invention contains a very high amount of shredded substrate material (S).

By the method according to the invention, especially particle/polymer composites are accessible, having a basis weight ≥ 500 and ≤ 30000 g/m², especially advantageously ≥ 1000 and ≤ 20000 g/m² and advantageously ≥ 1000 and ≤ 10000 g/m². The particle/polymer composites obtainable by the process according to the invention are flat in one preferred design form and have a non-surface-shaped three-dimensional structure in another preferred design form.

Also disclosed herein are the (textile-based) particle/polymer composites obtainable by the method according to the described process of the invention.

In particular when using a thermoplastic polymer to obtain thermoformable and/or embossable particle/polymer composites the following steps can be carried out.

The textile-based particle/polymer composite obtainable with the process of the invention can then (e.g. in a next step) be used for the manufacturing of a molded article (particle/polymer molded part), which differs in its shape and/or surface structure from the thermoformable and/or embossable particle/polymer composite. Then, the textile-based particle/polymer composite can be understood as a preform or a kind of intermediate product for preparing a molded article.

Correspondingly, the invention further includes a process for the manufacturing of a particle/polymer molded article, wherein the thermoformable and/or embossable textile-based particle/polymer composite obtained in the process described above is in a subsequent step heated to a temperature ≥ Tg^{P}, preferably > Tg^{P}, then brought (formed) into the desired shape and/or surface structure to obtain a shaped and/or surface-structured textile-based particle/polymer molding, which is then cooled to a temperature < Tg^{P} while retaining the formed shape and/or surface structure.

According to the invention (when using a thermoplastic polymer), the particle/polymer composite is heated to a temperature which corresponds at least to the glass transition temperature Tg^{P} of the polymer P. With advantage, the particle/polymer composite is heated to a temperature Tg^{P} + ≥ 10 °C and with special advantage Tg^{P} + ≥ 30 °C and the resulting particle/polymer molding is cooled to a temperature Tg^{P} - ≥ 10 °C and with special advantage Tg^{P} - ≥ 30 °C.

It is also important that the particle/polymer molding is produced in a preferred design form by means of a heated molding press, at least one contact surface of which has a temperature ≥ Tg^{P} and optionally a defined surface structure (i.e. a pattern protruding and/or protruding from the contact surface) and the shape of which corresponds to the negative shape of the particle/polymer molding and cooling of which takes place outside or inside the molding press. In this design, the heating and forming process take place in the heated molding press. Of course, according to the invention, it is also possible that the particle/polymer composite is heated outside the molding press to a temperature ≥ Tg^{P} and then formed in the molding press without or with further heating to form the particle/polymer molding and, if necessary, also cooled to a temperature < Tg^{P}. In this preferred design, the heating and the forming and cooling processes take place separately.

In another preferred design, the heating process of the particle/polymer composite is carried out by passing it between two metal rollers arranged axially parallel and rotating in the direction of passage, whereby
a) at least one of the metal rollers has a defined surface structure of the contact surface to the particle/polymer composite and a temperature ≥ Tg^{P},
b) the gap between the contact surfaces of the two metal rolls is smaller than the thickness of the particle/polymer composite, and
c) the passage of the particle/polymer composite between the contact surfaces of the two metal rolls is effected at a speed corresponding to the rotational speed of the contact surfaces of the two metal rolls.

As mentioned above, it is in all described embodiments using a thermoplastic polymer preferred to carry out the compressing and heating of the particle/polymer composite at a temperature > Tg^{P}.

It is self-explanatory for the expert that the defined surface structure of the contact surface of the at least one metal roller represents the negative of the surface structure formed on the particle/polymer molding. In the present design, the gap width corresponds advantageously to the thickness of the particle/polymer composite multiplied by a factor ≤ 0.98, particularly advantageously by a factor ≤ 0.6 and particularly advantageously by a factor ≤ 0.25. In order to form optimally positive surface structures on the polymer/particle molded part, it is essential that the polymer/particle composite is passed between the contact surfaces of the two metal rolls at a speed (in m/sec) that corresponds to the rotational speed of the contact surfaces (in m/sec) of the two metal rolls. This design is particularly suitable for the manufacturing of flat, planar particle/polymer moldings with an embossed surface structure.

The thickness of a particle/polymer composite in layer form before the heating process is usually in the range ≥ 1 mm and ≤ 10 cm, often in the range ≥ 1 mm and ≤ 3 cm and often in the range ≥ 1 mm and ≤ 1 cm.

In a further advantageous design form, the process according to the invention is carried out in such a way that before the heating process and before the forming and/or surface structuring process, an intermediate process step is carried out in which a sheet-like decorative material with a thickness ≤ 10 mm is applied to one and/or the other surface of the particle/polymer composite.

When using a duroplastic binder the subsequent compression and heat-molding step is omitted. However, in such cases a (decorative) lamination can be applied to the composite e.g. by using adhesives or glues or other conventional lamination techniques.

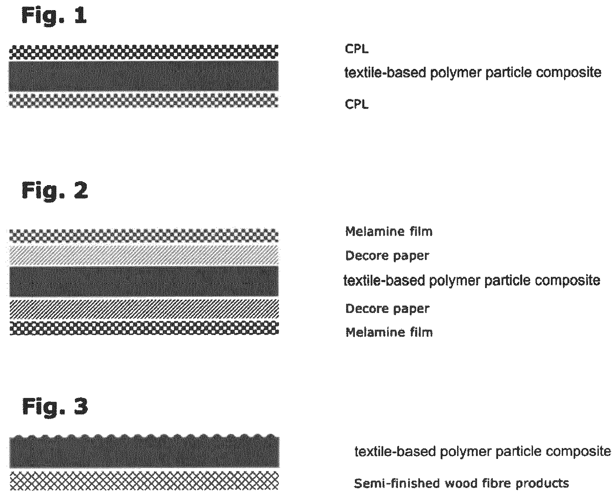

The decorative material which can be used according to the invention is advantageously a textile fabric, such as a non-woven fabric, a woven or knitted fabric made of natural or synthetic fibers, a plastic film, such as a thermoplastic polyvinyl chloride, polyolefin or polyester film, wood veneers or a HPL (high pressure laminate), CPL (continuous pressure laminate) or a decorative paper with/without melamine resin film (also known as a melamine resin overlay). Exemplary designs are shown in Fig. 1 and 2.

If the process of the invention comprises such a further step of laminating a decorative material onto the condensed / compressed particle/polymer composite layer, the condensed / compressed particle/polymer composite layer may be compressed even further in the process of applying the decorative material. This has the advantage that the first process step of producing the particle/polymer composite layer can be carried out more quickly and thus more cost-effective. In the subsequent process step of applying the decorative material the particle/polymer composite is recompacted by a factor of >1, preferably 1.3. This is particularly suitable for thermoformable composites.

Furthermore, according to the invention, it is possible to laminate the obtained textile-based composite semi-finished product boards with common wood-based panels such as chipboard, OSB (oriented strand board) or MDF (medium density fiberboard) boards, but especially with wood fiber semi-finished product boards (e.g. Homa-Form) to create laminates with embossed structures into the surface. Such designs are shown in Fig. 3.

Therefore, the process for manufacturing a molded article according to the invention, using a thermoplastic polymer, may comprise a step, wherein the resulting thermoformable and/or embossable textile-based particle/polymer composite is heated to a temperature ≥ Tg^{P} brought (formed) into the desired shape and/or surface structure together with a support structure and/or a protective layer made of HPL, CPL, melamine resin overlay or other usual wear/protective layers from wood-based materials industry to obtain a shaped and/or surface-structured textile-based particle/polymer molding with wear and/or protective layers which is then cooled to a temperature < Tg^{P} while maintaining its shape and / or surface structure.

The flat decorative material usually has a thickness ≤ 10 mm. If the flat decorative material is a textile fabric or plastic film, its thickness is usually ≤ 3 mm, often advantageously ≤ 2 mm and often especially advantageously ≤ 1 mm. However, if the decorative material in sheet form is a wood veneer, HPL (high pressure laminate), CPL (continuous pressure laminate) or melamine resin film, its thickness is usually ≤ 3 mm, often advantageous ≤ 2 mm and often especially advantageous ≤ 1 mm.

The present disclosure therefore relates to molded articles obtainable by the aforementioned method.

According to the invention, it is also important that both the process for producing the (thermoformable and/or embossable) particle/polymer composite (pre-form) and the process for producing the particle/polymer molded article (molding) can be carried out continuously or discontinuously.

The particle/polymer molded parts obtainable according to the invention have good thermal dimensional stability as well as good mechanical properties and are therefore advantageously suitable as elements in buildings, for example as wall panels, floor elements, room dividers, partition walls, ceiling panels, door leaves or wall decorating parts and also in furniture as molded furniture parts, for example as seat or back surfaces. The use of the particle/polymer moldings as elements in buildings and in furniture is therefore preferred according to the invention. Preferred is the use of the molded article as an element in structures such as wall panels, room dividers, floors, counters or in furniture. It is also possible to prepare generally any parts or elements which are suitable to replace conventional parts or elements made of plastic or wood.

Generally, the water content before pressing is the most critical parameter during pressing when using duroplastic binders. As the mixture of duroplastic binder and textile-fiber particles has to be compacted to the final product in one step, since post-compaction is not possible, the water content has to be very low at the beginning (< 3%) to prevent bubble formation or bursting. Additionally, the regulation of water content may be critical due to the fact, that during crosslinking of reactive formaldehyde containing resins, e.g. UF-, PF-, MUF-resins, water is released (condensation reaction), which increases the moisture content in the pressed good which leads to higher water vapor pressure with higher risk for bubbles and blisters. To overcome this problem, e.g. the pressing of HPL products is usually carried out:
1. by placing with reactive formaldehyde-resin impregnated textile-sheets into the cold press,
2. followed by heating the press up to 140 °C or more to cure the resin,
3. then cooling down the pressed material to reduce the water vapor pressure in the HPL to avoid bubbles and blisters.

Such heating and cooling process steps require a high amount of energy and last between 60-75 minutes.

By using the pre-manufactured semi-finished textile-based particle/polymer composites according to the invention as described herein, such heating and cooling steps of the press are not necessary and the process can be shortened down to cycle times below 5 minutes. Additionally, the pressing can be done at lower temperatures to reduce the inner water vapor pressure. This results in an energy saving (CO₂ reduction) and time reduction which at the end leads to cost reduction. By the use of thermoplastic resins defined above in the process described herein no chemical reaction is required for bonding of the textile-based particles. Accordingly, no water will be released and the inner water vapor pressure remains low.

Chipboard, i.e. wood particles, plus thermosetting binders, is therefore only produced up to a density of 0.7 g/cm³. If these were compressed to higher densities during pressing and hardening of the binder in the press, bubbles and bursts would form after opening the press due to the high water vapor pressure (pressing at 180-220°C = 8-12 bar water vapor pressure), which would tear the board open and make it unusable. Due to the density below 1 g/cm³ a chipboard is porous, and the water vapour can evaporate during the process. This behavior is also known in the production of HPL, CPL or synthetic resin pressed wood. PF resin impregnated papers or veneers are pressed into boards in hot presses and hardened. The residual moisture content of the impregnated paper or veneer must be below 3%, otherwise bubbles and bursts will occur.

However, in order to produce mechanically stable boards based on textile particles and especially high percentages of them, it is necessary to obtain high densities.

Accordingly, when using thermoplastic binders defined above in a process described herein, a pre-manufactured semi-finished thermoformable textile-based particle/polymer composite with a lower density can be produced in a first process step, which can then be pressed to higher densities in a second process step. Therefore, the invention provides a process for producing panels, based on shredded textile particles, having a very high density.

It has been found that the properties of the obtained composite, in particular the mechanical properties, such as rigidity, elasticity, water resistance, adsorption and swelling properties as well as insulating properties can be adjusted by varying the mixing ratios of the different particle/fiber materials used.

### Description of the Figures

Figures 1 to 3 show exemplary embodiments of molded articles according to the invention laminate structures for articles molded bodies according to the invention made with the textile-based particle/polymer composite of the invention.

### Examples:

The tests were carried out with a 12 inch (1 inch = 2.54 cm) refiner from Antriz and a Blowline connected to it. The refiner was operated at 130-140 °C and an internal pressure of 3-4 bar (gauge pressure). The distance between the two grinding plates was 1.0 mm, and one of the grinding plates was operated at 3000 rpm. The Blowline (steel pipe) connected to the refiner via a flange had an inner diameter of 3 cm and a pipe length of 30 m. The aqueous dispersion of the polymer P (binders) were then injected into the Blowline at 2 bar (overpressure) via a 0.2 mm nozzle mounted on the Blowline at a distance of 50 cm from the refiner outlet/ Blowline inlet. At the end of the Blowline a cyclone separator was located through which the particulate substrates S contacted with the polymer P (i.e. the polymer-contacted substrate / binder-contacted substrate) were dried and cooled to a temperature of approx. 80 °C and separated into an open container.

Shredded cotton particles (RC, reclaimed cotton) were pretreated with 130-140 °C hot water/steam at 3-4 bar overpressure in the digester and used for the tests, and the mass flow rate of the pretreated shredded cotton particles (RC, reclaimed cotton) into the refiner (or into the Blowline) was set at 30 kg per hour.

Shredded polymer-glued or polymer-coated waste paper products (RP, reclaimed paper) were pretreated with 130-140 °C hot water/steam at 3-4 bar overpressure in the digester and used for the tests, and the mass flow rate of the pretreated shredded waste paper (particulated polymer-glued/polymer-coated paper) into the refiner (or into the Blowline) was set at 30 kg per hour.

Shredded biomaterial fibers (WO, spruce) were pretreated were pretreated with 130-140 °C hot water/steam at 3-4 bar overpressure in the digester and used for the tests, and the mass flow rate of the pretreated shredded biomaterial fibers (WO, spruce) into the refiner (or into the Blowline) was set at 30 kg per hour.

The dispersion acForm^{®} 2889 (BASF) (modified polyacrylates), UF resin Kaurit^{®} (1-component Urea Formaldehyde resin) and pMDI (polymeric diphenylmethanediisocyanate) were used as binder, as shown in the table "Fiber-Binder-Matrix" below. The binder was injected into the Blowline by means of an eccentric screw pump at a pressure of 2 bar (overpressure) via the 0.2 mm nozzle(s), the mass flows being adjusted to 5.3 kg binder (calculated as solid) and 10.6 kg (as 50% solids dispersion) per hour. The test was carried out for 1 hour in continuous steady state, during which time the shredded particles were contacted (sprayed) with the binder and collected in an open container. Textile particles, paper particles and wood particles were each treated and processed separately in the same way and collected separately.

The Particle/Fiber-Binder ratio is set between 85-90 % particles/fibers and 10-15% binder for acForm^{®} and UF-resin, for the PMDI a ratio set to 95% particles/fibers and 5% binder was used.

After passing the Blowline process the glued particles/fibers (particle/polymer mixtures) were each collected separately. The residual moisture of the glued and dried particles/fibers was adjusted to 8-10%. The further processing of the particles/fibers coated with the reactive duroplastic binder (UF- and pMDI resin) followed immediately due to low storage capabilities of such systems. The further processing of the samples with the thermoplastic binder is not time-critical due to long storage stability of the binder.

According to the following Matrix, 7 different examples were prepared and tested.

### Particle/Fiber-Binder-Matrix of Mixtures used for preparing sample boards

| **Particle / Fiber-Binder** | **RC* acForm^{®} 2889** | **RC* Kaurit^{®} XYZ** | **RC* pMDI** | **RP* acForm^{®} 2889** | **WO* acForm^{®} 2889** | **WO* Kaurit^{®} xyz** |
|---|---|---|---|---|---|---|
| **Mixture 1** | 100 % | | | | | |
| **Mixture 2** | | 100 % | | | | |
| **Mixture 3** | | | 100 % | | | |
| **Mixture 4** | 50 % | | | 50 % | | |
| **Mixture 5** | 50 % | | | | 50 % | |
| **Mixture 6** | | 50 % | | | | 50 % |
| **Mixture 7** | 34 % | | | 33 % | | 33 % |

| | | | | | | |
|---|---|---|---|---|---|---|
| RC = reclaimed cotton (corresponding to substrate S_{T}) RP = reclaimed glued paper (corresponding to substrate S_{P}) WO = wood (spruce) (corresponding to substrate S_{B}) | | | | | | |

The glued particles/fibers were mixed (blended) in a separate step in a blender.

### Board preparation:

The mixed (blended) glued fibers for the sample boards No. 1 - 7 were evenly scattered into a frame box of 22 × 22 × 30 cm (L/W/H), pre-compressed and then compressed at 180 °C to the required thickness of 4 mm. The Press-Time-Factor used was 15 sec./mm resulting in a press time of 60 sec. The target density for the board was 0.95 g/m³.

The details of the process were as follows:
A 22x22 cm wooden plate was placed horizontally on top of the obtained layer or floor of the shredded and polymer (binder)-contacted particles in the wooden frame and pre-compacted with a central stamp. The pre-compacted layer or floor of the shredded and polymer (binder)-contacted particles thus obtained was then removed from the wooden frame, covered on both square surfaces with a release paper and compacted to the target thickness/density between two 3 mm thick horizontal press plates at 180 °C under pressure with a pressing time factor of 15 seconds per millimeter, the lower side of the pre-compacted layer or floor being placed on the lower horizontal press plate in each case. Subsequently, the obtained compressed particle plates (sheets or boards) were allowed to cool to room temperature outside the press.

**Table of sample boards of different fiber mixtures**

| **Mixture No.** | **Board No.** | **Scatter weight [g]** | **Board weight [g]** | **Board thickness [mm]** | **Board density [g/cm³]** |
|---|---|---|---|---|---|
| 1 | 1 | 200 | 190 | 4.2 | 0.93 |
| 2 | 2 | 200 | 192 | 4.1 | 0.97 |
| 3 | 3 | 200 | 190 | 4.1 | 0.96 |
| 4 | 4 | 200 | 191 | 4.1 | 0.96 |
| 5 | 5 | 200 | 192 | 4.2 | 0.94 |
| 6 | 6 | 200 | 193 | 4.2 | 0.95 |
| 7 | 7 | 200 | 192 | 4.1 | 0.97 |

### Investigation of the mechanical properties of compressed boards (molded articles obtained from the particle/polymer composites prepared in the Blowline process described above

The following tests were carried out with the obtained particle sheets:
Determination of E-modulus (modulus of elasticity), bending stress, and water swelling after 24 h. The modulus of elasticity (E-module) and bending stress were determined in accordance with the ISO 178 standard. The water swelling after 24 h was determined according to DIN EN 316.

The results obtained with the various thicknesses and densities of the test pieces are listed in the following Table:

| **Board No.** | **1** | **2** | **3** | **4** | **5** | **6** | **7** |
|---|---|---|---|---|---|---|---|
| **E-module [N/mm²]** | 2514 | 2898 | 3346 | 2680 | 3214 | 3486 | 2956 |
| **deviation [N/mm²]** | 635 | 598 | 625 | 566 | 601 | 589 | 448 |
| **Bending stress [N/mm²]** | 24 | 35 | 42 | 30 | 45 | 52 | 28 |
| **deviation [N/mm²]** | 6 | 6 | 6 | 5 | 5 | 6 | 4 |
| **Water swelling 24 h [%]** | 33 | 36 | 38 | 28 | 33 | 38 | 35 |
| **deviation [%]** | 3 | 4 | 4 | 3 | 3 | 4 | 2 |

## Claims

1. Process of manufacturing a textile-based particle/polymer composite using a particulate substrate S comprising shredded textile products and at least one polymeric binder P, comprising the following steps:
(i) the particulate substrate S is introduced into a gas stream, then
(ii) the particulate substrate S is contacted with a dispersion or solution of the polymeric binder P in the gas stream, then
(iii) the particulate substrate S contacted with the polymeric binder P is dried in the gas stream and deposited, then
(iv) the obtained deposited binder-contacted substrate is converted into a layer or transferred into a mold of a desired shape, and then
(v) the binder-contacted substrate is densified at a suitable temperature to form the textile-based particle/polymer composite,
wherein
(a) the substrate S comprises shredded textile products; and
(b) the polymeric binder P is thermoplastic and has a glass transition temperature [Tg^{P}] ≥ - 20 °C measured according to DIN EN ISO 11357-2 (2013-09), or
(c) the polymeric binder P is duroplastic.

2. The process according to claim 1, wherein additionally a substrate S_{P}, comprising shredded polymer-glued or polymer-coated paper products, and/or a substrate S_{B}, comprising shredded biomaterials such as bamboo, miscanthus or wood particles, is introduced into the gas stream of step (i) and contacted with the polymeric binder P in step (ii).

3. The process according to claim 1 or 2, wherein the substrate S is obtained by shredding, cutting, chopping, milling, or otherwise crushing textile products.

4. The process according to one of claims 1 to 3, wherein the textile products are selected from natural or synthetic fibers or textile materials, including cotton, denim, textile waste or textile scraps from the manufacturing process of clothes, wool, silk, jute fibers, hemp fibers, kenaf (*Hibiscus cannabinus*) fibers, velvet, taffeta, fibers derived from leather, cellulose staple fibers, polyamides, polyester, polyolefins, polyurethanes, nylon, acrylics, and aramids.

5. The process of any of claims 1 to 4, wherein the wood products as starting material for the substrate S_{B} are selected from salvage timber, sawdust, wood scraps, wood fibers, wood shavings, wood flour, wood chips, post-industrial or post-consumer wood waste, bamboo, miscanthus chips, and/or
the polymer-glued or polymer-coated paper products as starting material for the substrate S_{P} are selected from polymer-coated disposable paper products, including polymer-coated paper take-away cups, dishes, bowls, bags, beverage cartons or packages.

6. The process according to any one of claims 1 to 5, wherein the polymeric binder P is a thermoplastic polymer having a glass transition temperature [Tg^{P}] ≥ 20 °C.

7. The process according to any one of claims 1 to 6, **characterized in that** the weight ratio of substrate S to polymeric binder P is ≥ 2 and ≤ 50.

8. The process according to any one of claims 1 to 7, **characterized in that** the textile-based particle/polymer composite obtained is sheet-like and has a basis weight ≥ 500 and ≤ 30 000 g/m².

9. The process according to any one of claims 1 to 8, **characterized in that** the densification in step (v) is carried out in a way that the density of the obtained textile-based particle/polymer composite is increased by a factor up to 20 compared to the corresponding transferred deposited binder-contacted substrate of step (iv).

10. The process according to any one of claims 1 to 9, **characterized in that** the densification in step (v) is carried out in a way that the obtained textile-based particle/polymer composite has a density of 0.30 to 0.98 g/cm³.

11. The process according to any one of claims 1 to 10, wherein the polymeric binder P is a thermoplastic polymer, further comprising a step of forming a molded article by heating the obtained thermoformable and/or embossable textile-based particle/polymer composite according to step (v) to a temperature ≥ Tg^{P}, bringing the heated composite into the desired shape and/or surface structure to obtain a shaped and/or surface-structured textile-based particle/polymer molding, which is then cooled to a temperature < Tg^{P} while retaining the formed shape and/or surface structure.

12. The process according to any one of claims 1 to 10, wherein the polymeric binder P is a thermoplastic polymer, further comprising a step of forming a molded article by heating the obtained thermoformable and/or embossable textile-based particle/polymer composite according to step (v) to a temperature ≥ Tg^{P}, bringing the heated composite into the desired shape and/or surface structure together with a support structure and/or a protective layer made of HPL (high pressure laminate), CPL (continuous pressure laminate) or melamine resin overlay or other wood-based panels selected from chipboard, OSB (oriented strand board) or MDF (medium density fiberboard) boards, or with wood fiber semi-finished product boards (e.g. Homa-Form) to obtain a shaped and/or surface-structured textile-based particle/polymer molding with wear and/or protective layers which is then cooled to a temperature < Tg^{P} while maintaining its shape and / or surface structure.

13. The process according to claim 12, wherein the support structure and/or protective layer are made of HPL, CPL or melamine resin overlay.

## Patentansprüche

1. Verfahren zur Herstellung eines textilbasierten Partikel/Polymer-Komposits unter Verwendung eines partikelförmigen Substrats S, das zerkleinerte Textilprodukte und mindestens ein polymeres Bindemittel P umfasst, umfassend die folgenden Schritte:
(i) das partikelförmige Substrat S wird in einen Gasstrom eingebracht, dann
(ii) das partikelförmige Substrat S wird mit einer Dispersion oder Lösung des polymeren Bindemittels P in dem Gasstrom kontaktiert, dann
(iii) das mit dem polymeren Bindemittel P kontaktierte partikelförmige Substrat S wird in dem Gasstrom getrocknet und abgeschieden, dann
(iv) das erhaltene abgeschiedene Bindemittel-kontaktiere Substrat wird zu einer Schicht umgewandelt oder in eine Gussform mit der gewünschten Form übertragen, und dann
(v) das Bindemittel-kontaktierte Substrat wird bei einer geeigneten Temperatur verdichtet, um ein textilbasiertes Partikel/Polymer-Komposit zu formen,
worin
(a) das Substrat S zerkleinerte Textilprodukte umfasst; und
(b) das polymere Bindemittel P ein thermoplastisches Polymer ist und eine Glasübergangstemperatur [Tg^{P}] ≥ - 20 °C gemessen nach DIN EN ISO 11357-2 (2013-09) aufweist, oder
(c) das polymere Bindemittel P ein duroplastisches Polymer ist.

2. Das Verfahren gemäß Anspruch 1, worin zusätzlich ein Substrat S_{P}, welches zerkleinerte polymerverleimte oder polymerbeschichtete Papierprodukte umfasst, und/oder ein Substrat S_{B}, welches zerkleinerte Biomaterialien wie Bambus, Miscanthus oder Holzpartikel umfasst, in den Gasstrom des Schrittes (i) eingebracht und mit dem polymeren Bindemittel P des Schrittes (ii) kontaktiert wird.

3. Das Verfahren gemäß Anspruch 1 oder 2, worin das Substrat S durch Schreddern, Schneiden, Zerhacken, Mahlen oder anderweitiges Zerkleinern von Textilprodukten erhalten wird.

4. Das Verfahren gemäß einem von Anspruch 1 bis 3, worin die Textilprodukte ausgewählt sind aus natürlicher oder synthetischer Faser oder aus Textilmaterialien, einschließlich Baumwolle, Jeans, Textilabfälle, oder Textilreste aus dem Herstellungsprozess von Kleidung, Wolle, Seide, Jutefasern, Hanffasern, Kenaf (*Hibiscus cannabinus*) Fasern, Samt, Taft, Fasern, die von Leder abgeleitet sind, Zellulose-Stapelfasern, Polyamiden, Polyester, Polyolefinen, Polyurethanen, Nylon, Acryl und Aramiden.

5. Das Verfahren gemäß einem von Anspruch 1 bis 4, worin die Holzprodukte, die Ausgangsmaterial für das Substrat S_{B} sind, ausgewählt werden aus Bergungsholz, Sägemehl, Holzresten, Holzfasern, Holzspänen, Holzmehl, Hackschnitzel, postindustriellen oder postkonsumtiven Holzabfällen, Bambus Miscanthusspänen
und/oder
die polymerverleimten oder polymerbeschichteten Papierprodukte die Ausgangsmaterial für das Substrat S_{P} sind, ausgewählt werden aus polymerbeschichteten Einwegpapierprodukten, einschließlich polymerbeschichtete Papierbecher zum Mitnehmen, Geschirr, Schüsseln, Tüten, Getränkekartons oder Verpackungen.

6. Das Verfahren gemäß einem von Anspruch 1 bis 5, worin das polymere Bindemittel P ein thermoplastisches Polymer mit einer Glasübergangstemperatur [Tg^{P}] ≥ 20 °C ist.

7. Das Verfahren gemäß einem von Anspruch 1 bis 6, **dadurch gekennzeichnet, dass** das Gewichtsverhältnis zwischen dem Substrats S und dem polymeren Bindemittel P zwischen ≥ 2 und ≤ 50 liegt.

8. Das Verfahren gemäß einem von Anspruch 1 bis 7, **dadurch gekennzeichnet, dass** das erhaltene textilbasierte Partikel/Polymer-Komposit flächig ist und ein Flächengewicht zwischen ≥ 500 und ≤ 30 000 g/m² aufweist.

9. Das Verfahren gemäß einem von Anspruch 1 bis 8, **dadurch gekennzeichnet, dass** die Verdichtung in Schritt (v) auf eine Weise ausgeführt wird, sodass die Dichte des erhaltenen textilbasierten Partikel/Polymer-Komposits um einen Faktor von 20 verglichen mit der des korrespondierenden übertragenen abgeschiedenen Bindemittel-kontaktieren Substrates des Schrittes (iv) erhöht ist.

10. Das Verfahren gemäß einem von Anspruch 1 bis 9, **dadurch gekennzeichnet, dass** die Verdichtung in Schritt (v) auf eine Weise ausgeführt wird, sodass das erhaltene textilbasierte Partikel/Polymer-Komposit eine Dichte von 0.30 bis 0.98 g/cm³ aufweist.

11. Das Verfahren gemäß einem von Anspruch 1 bis 10, worin das polymere Bindemittel P ein thermoplastisches Polymer ist, umfassend eines weiteren Schrittes in dem ein Formartikel durch Erhitzen des erhaltenen thermoformbaren und/oder prägbaren Partikel/Polymer-Komposits gemäß Schritt (v) zu einer Temperatur ≥ Tg^{P} geformt wird, das erhitzte Komposit in die gewünschte Form und/oder Oberflächenstruktur gebracht wird, um einen geformten und/oder oberflächenstrukturierten textilbasierten Partikel/Polymerguss zu erhalten, welcher dann auf eine Temperatur < Tg^{P} abgekühlt wird, während die Form oder Oberflächenstruktur erhalten bleibt.

12. Das Verfahren gemäß einem von Anspruch 1 bis 10, worin das polymere Bindemittel P ein thermoplastisches Polymer ist, umfassend eines weiteren Schrittes in dem ein Formartikel durch Erhitzen des erhaltenen thermoformbaren und/oder prägbaren Partikel/Polymer-Komposits gemäß Schritt (v) zu einer Temperatur ≥ Tg^{P} geformt wird, das erhitzte Komposit gemeinsam mit einer Stützstruktur und/oder mit einer Schutzschicht aus HPL (Hochdruck-Laminat), CPL (Dauerdruck-Laminat) oder einem Melaminharzüberzug oder einer anderen holzbasierten Platte ausgewählt aus Spanplatten, OSB (Brettschichtholz) oder MDF (mitteldichte Faserplatte) Brettern, oder mit halbfertigen Holzfaserproduktbrettern (z. B. Homa-Form) in die gewünschte Form und/oder Oberflächenstruktur gebracht wird, um einen geformten und/oder oberflächenstrukturierten textilbasierten Partikel/Polymerguss zu erhalten, welcher dann auf eine Temperatur < Tg^{P} abgekühlt wird, während die Form oder Oberflächenstruktur erhalten bleibt.

13. Das Verfahren gemäß Anspruch 12, worin die Stützstruktur und/oder die Schutzschicht aus HPL, CPL oder Melaminharz bestehen.

## Revendications

1. Procédé de fabrication d'un composite de particules/polymère à base de textile utilisant un substrat particulaire S comprenant des produits textiles déchiquetés et au moins un liant polymère P, comprenant les étapes suivantes:
(i) le substrat particulaire S est introduit dans un flux gazeux, puis
(ii) le substrat particulaire S est mis en contact avec une dispersion ou une solution du liant polymère P dans le flux gazeux, puis
(iii) le substrat particulaire S mis en contact avec le liant polymère P est séché dans le flux gazeux et déposé, puis
(iv) le substrat déposé contacté par le liant obtenu est converti en une couche ou transféré dans un moule de la forme désirée, et ensuite
(v) le substrat contacté par le liant est densifié à une température appropriée pour former le composite de particules/polymère à base de textile,
dans lequel
(a) le substrat S comprend des produits textiles déchiquetés; et
(b) le liant polymère P est thermoplastique et a une température de transition vitreuse [Tg^{P}] ≥ - 20 °C mesurée selon la norme DIN EN ISO 11357-2 (2013-09), ou
(c) le liant polymère P est duroplastique.

2. Le procédé selon la revendication 1, dans lequel en outre un substrat S_{P} comprenant des produits de papier déchiquetés collés au polymère ou revêtus de polymère, et/ou un substrat S_{B} comprenant des biomatériaux déchiquetés tels que le bambou, le miscanthus ou des particules de bois, est introduit dans le flux de gaz de l'étape (i) et mis en contact avec le liant polymérique P à l'étape (ii).

3. Le procédé selon la revendication 1 ou 2, dans lequel le substrat S est obtenu en déchiquetant, en coupant, en hachant, en broyant ou en écrasant d'une autre manière des produits textiles.

4. Le procédé selon l'une des revendications 1 à 3, dans lequel les produits textiles sont choisis parmi les fibres naturelles ou synthétiques ou les matières textiles, incluant le coton, le denim, les déchets textiles ou les chutes textiles provenant du processus de fabrication de vêtements, la laine, la soie, les fibres de jute, les fibres de chanvre, les fibres de kenaf (*Hibiscus cannabinus*), le velours, le taffetas, les fibres dérivées du cuir, les fibres cellulosiques discontinues, les polyamides, le polyester, les polyoléfines, les polyuréthanes, le nylon, les acryliques, et les aramides.

5. Le procédé de l'une des revendications 1 à 4, dans lequel les produits du bois utilisés comme produit de départ pour le substrat S_{B} sont choisis parmi le bois de récupération, la sciure, les déchets de bois, les fibres de bois, les copeaux de bois, la farine de bois, les chips de bois, les déchets de bois post-industriels ou de postconsommation, le bambou, les copeaux de miscanthus, et/ou les produits en papier collés au polymère ou enduits de polymère utilisés comme produit de départ pour le substrat S_{P} sont choisis parmi les produits en papier jetables enduits de polymère, incluant les gobelets, plats, bols, sacs, cartons à boissons ou emballages en papier enduits de polymère.

6. Le procédé selon l'une quelconque des revendications 1 à 5, dans lequel le liant polymère P est un polymère thermoplastique ayant une température de transition vitreuse [Tg^{p}] ≥ 20 °C.

7. Le procédé selon l'une quelconque des revendications 1 à 6, **caractérisé en ce que** le rapport en poids du substrat S au liant polymérique P est ≥ 2 et ≤ 50.

8. Le procédé selon l'une quelconque des revendications 1 à 7, **caractérisé en ce que** le composite de particules/polymère à base de textile obtenu est en forme de feuille et a un poids de base ≥ 500 et ≤ 30 000 g/m².

9. Le procédé selon l'une quelconque des revendications 1 à 8, **caractérisé en ce que** la densification à l'étape (v) est conduite de manière à ce que la densité du composite de particules/polymère à base de textile obtenu est augmentée d'un facteur jusqu'à 20 en comparaison le substrat correspondant transféré et déposé, en contact avec le liant, de l'étape (iv).

10. Le procédé selon l'une quelconque des revendications 1 à 9, **caractérisé en ce que** la densification à l'étape (v) est conduite de manière à ce que le composite de particules/polymère à base de textile obtenu a une densité de 0,30 à 0,98 g/cm³.

11. Procédé selon l'une quelconque des revendications 1 à 10, dans lequel le liant polymère P est un polymère thermoplastique, comprenant en outre une étape de formage d'un article moulé en chauffant le composite de particules/polymère à base de textile thermoformable et/ou gaufrable obtenu selon l'étape (v) à une température ≥ Tg^{P}, en donnant au composite chauffé la forme et/ou la structure de surface désirée pour obtenir un moulage de particules/polymère à base de textile façonné et/ou structuré en surface, qui est en suite refroidi à une température < Tg^{P} en conservant la forme et/ou la structure de surface formée.

12. Le procédé selon l'une quelconque des revendications 1 à 10, dans lequel le liant polymère P est un polymère thermoplastique, comprenant en outre une étape de formage d'un article moulé en chauffant le composite de particules/polymère à base de textile thermoformable et/ou gaufrable obtenu selon l'étape (v) à une température ≥ Tg^{P}, en donnant au composite chauffé la forme et/ou la structure de surface désirée avec une structure de support et/ou une couche de protection en HPL (stratifié haute pression), CPL (stratifiés pressés en continu) ou en résine de mélamine ou d'autres panneaux à base de bois choisis parmi les panneaux d'aggloméré, OSB (panneaux à copeaux orientés) ou MDF (panneaux de fibres de densité moyenne), ou avec des panneaux de produits semi-finis en fibres de bois (par exemple Homa-Form) pour obtenir un moulage de particules/polymères à base de textile façonné et/ou structuré en surface avec des couches d'usure et/ou de protection qui est ensuite refroidie à une température < Tg^{P} en conservant sa forme et/ou sa structure de surface.

13. Le procédé selon la revendication 12, dans lequel la structure de support et/ou la couche de protection sont faites de HPL, CPL ou de résine de melamine.
